Europäisches Patentamt

European Patent Office

Office européen des brevets

(11) Veröffentlichungsnummer : **0 025 229**
**B1**

(12) **EUROPÄISCHE PATENTSCHRIFT**

(45) Veröffentlichungstag der Patentschrift :
07.12.83

(51) Int. Cl.³ : **G 02 B   7/26**

(21) Anmeldenummer : **80105366.1**

(22) Anmeldetag : **08.09.80**

(54) **Spleissverbindung von Lichtwellenleiter-Kabeln mit Hohladern.**

(30) Priorität : **11.09.79 DE 2936716**

(43) Veröffentlichungstag der Anmeldung :
**18.03.81 Patentblatt 81/11**

(45) Bekanntmachung des Hinweises auf die Patenterteilung : **07.12.83 Patentblatt 83/49**

(84) Benannte Vertragsstaaten :
**AT BE DE FR GB IT NL SE**

(56) Entgegenhaltungen :
**DE-A- 2 531 994**
**DE-A- 2 729 682**
**DE-B- 1 204 729**
**DE-C-   606 402**
**FR-A- 2 370 225**
**FR-A- 2 431 713**

(73) Patentinhaber : **SIEMENS AKTIENGESELLSCHAFT**
**Berlin und München Wittelsbacherplatz 2**
**D-8000 München 2 (DE)**

(72) Erfinder : **Liertz, Heinrich, Dr.**
**Engelstrasse 6**
**D-8000 München 71 (DE)**

## Spleißverbindung von Lichtwellenleiter-Kabeln mit Hohladern

Die Erfindung betrifft eine Verbindungsanordnung für Lichtwellenleiter-Kabel mit Hohladern, bei denen die auf Stoß gespleißten Lichtwellenleiter lose und helixförmig in den Umhüllungen angeordnet sind, wobei Röhrchen zur Überbrückung der Lichtwellenleiter-Verbindungsstelle an den Enden der Umhüllungen angebracht sind.

Es sind vielerlei Verbindungsanordnungen von Lichtwellenleitern bekannt. In den meisten Fällen handelt es sich dabei um Verbindungen der Lichtwellenleiter selbst. Hierfür sind Vorrichtungen zur Zentrierung und Ausrichtung der Lichtwellenleiterenden nötig. Eine derartige Verbindungsanordnung wird beispielsweise in der DE-A-24 25 798 beschrieben. Ein rohrförmiger Mantel umschließt die zu verbindenden Lichtwellenleiterenden und dieser wird zum Fixieren und Zentrieren der blanken Lichtwellenleiterenden auf diese aufgeschrumpft. Diese Verbindung umfaßt jedoch nur die Lichtwellenleiterverbindung selbst und nicht die Verbindung der Umhüllungen. Weiterhin ist aus der DE-A-27 29 682 zum Schutz einer Verbindungsstelle von Lichtwellenleitern ein Oberflächenschutz in Form eines außen auf die Umhüllungen aufgebrachten und mit diesem verklebten Röhrchens bekannt. Diese Anordnung weist nun den Nachteil auf, daß das Röhrchen nur sehr leicht auf die Umhüllungen aufgebracht werden kann, um ein Zusammendrücken dieser Umhüllungen zu vermeiden. Deshalb wird dort eine Verklebung vorgesehen, die mit äußerster Sorgfalt vorgenommen werden muß, um eine Verklebung im Inneren der Hohlader zu verhindern. Außerdem sind noch die Aushärtezeiten des Klebers zu berücksichtigen.

Die zuerst genannten Verbindungen werden zumeist in Muffen oder ähnlichem untergebracht, so daß das Problem der Verbindung der Umhüllungen meist nicht vordergründig ist. Für einen derartig aufgebauten Lichtwellenleiterspleiß werden also die zu verbindenden Kabelenden in spezielle Gehäuse eingeführt. Solche Spleiße sind jedoch nicht vorteilhaft, wenn lediglich eine Verbindung von Kabeladern und nicht wie bei den angedeuteten Fällen auch eine Aufteilung der Kabeladern stattfinden soll.

So ist es nun Aufgabe der Erfindung, eine Verbindungsanordnung für Lichtwellenleiterkabel zu schaffen, mit deren Hilfe die Verbindung von Kabeladern, insbesondere von Hohladern, im Kabelverband ohne wesentliche Aufdickung und montagefreundlich ohne Wartezeiten erfolgen kann. So sind dann besondere Gehäuse für die Unterbringung des Spleißes nicht mehr nötig und die Montage kann kontinuierlich ohne Zeitverlust ausgeführt werden. Die Aufgabe wird nun mit Hilfe einer Verbindungsanordnung der eingangs geschilderten Art erfindungsgemäß dadurch gelöst, daß ein Außenröhrchen und ein Innenröhrchen im Bereich der Trennstelle die Umhüllungen überbrückend angeordnet sind, daß das Außenröhrchen längsgeschlitzt und auf dem Innenröhrchen und den dazwischenliegenden Umhüllungen durch Aufkrimpen fixiert ist.

Das Wesentliche der Erfindung ist darin zu sehen, daß sich durch dieses als Totalspleiß verstandene Zusammenspleißen zweier Kabel ohne Muffe kaum eine Aufdickung der zusammengespleißten Kabel ergibt. Es werden dabei die Lichtwellenleiteradern, die Umhüllungen und die Kabelmäntel auf Stoß gespleißt. Diese Technik setzt normalerweise voraus, daß die Lichtwellenleiter genau auf Länge gespleißt werden können, damit im Verseilverband der Lichtwellenleiteradern keine Kreuzungspunkte entstehen. Wenn jedoch keine exakten Längen gegeben sind, so bietet sich hierfür die Verwendung einer Lichtwellenleiter-Ader an, bei der infolge des helixförmig und damit in Überlänge eingebrachten Lichtwellenleiters innerhalb der Umhüllung ein gewisser Längenausgleich erfolgen kann.

Durch die Erfindung wird dieses Problem nun dadurch gelöst, daß die auf Stoß gespleißten Lichtwellenleiterenden wieder in die Hohlader eingeführt werden und zwar durch Verwendung von Röhrchen, mit denen die Trennstelle der Umhüllungen überbrückt wird. Diese Überbrückung der Umhüllungen erfolgt nun mit einem auf die Umhüllungen passenden Außenröhrchen und einem in die Umhüllungen passenden Innenröhrchen. Ein wichtiger Gedanke ist auch darin zu sehen, daß bei der Verbindung der Umhüllungen mit Hilfe der Röhrchen auch ein gewisser Ausgleich der Länge erfolgen kann, da die Umhüllungen mehr oder weniger nahe zusammengefügt werden können. Die Überbrückung des sich dabei ergebenden Zwischenraumes erfolgt durch die Röhrchen. Durch diese Möglichkeit könnte man von einer sogenannten atmenden Spleißverbindung sprechen, da der Längenausgleich je nach Bedarf variiert werden kann.

Die Erfindung wird nun an Hand einer Figur näher erläutert, wobei auch auf die Herstellung dieser Verbindungsanordnung eingegangen wird.

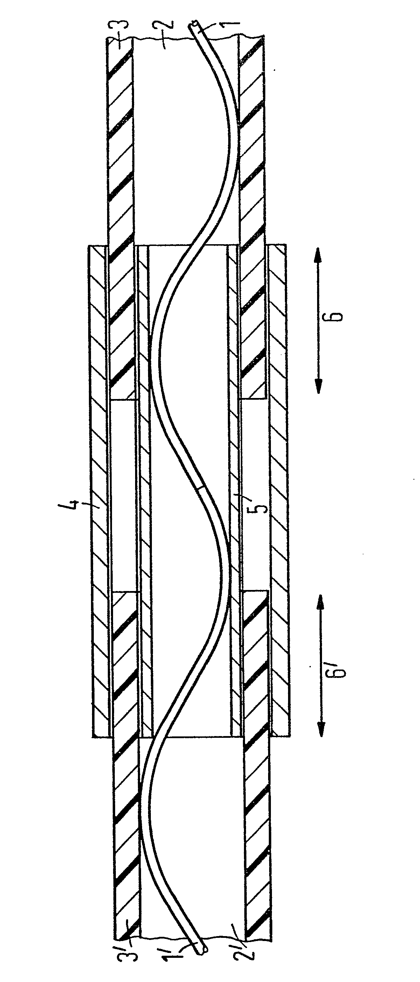

Aus der Figur sind die Lichtwellenleiterenden 1 und 1' ersichtlich, die etwa in der Mitte auf Stoß, zum Beispiel durch Zusammenschweißen der Stirnflächen miteinander verbunden wurden. Dieser zusammengesetzte Lichtwellenleiter ist in den Umhüllungen 3 bzw. 3' helixförmig eingebracht und wird insgesamt als Hohlader bezeichnet. Der Lichtwellenleiter ist dabei in Überlänge in der Umhüllung, so daß ein Längenausgleich erfolgen kann. Vor dem eigentlichen Spleißvorgang der Lichtwellenleiterenden wird nun in die Hohlader, das heißt ins Innere 2 einer Umhüllung, zum Beispiel 3, ein Innenröhrchen 5 mit entsprechendem Durchmesser eingeführt und über die Umhüllung, zum Beispiel ebenfalls 3, wird ein Außenröhrchen 4 geschoben. Der Außendurchmesser des Innenröhrchens und der Innendurchmesser des Außenröhrchens sind so bemessen, daß sie gerade in bzw. auf die Umhüllungen geschoben werden können. Der Innendurchmesser des Innenröhrchens ist außerdem so bemessen, daß eine helixförmige Ausdehnung des gespleißten Lichtwellenleiters 1 weiterhin möglich ist. Nachdem der Spleißvorgang der Lichtwellenleiterenden beendet ist, werden die beiden vorher montierten Röhrchen 4 und 5 so verschoben, daß sie schließlich beide Umhüllungen 3 und 3' erfassen. Die Enden der Umhüllungen 3 und 3' können mehr oder weniger nahe aneinander herangeführt sein, so daß eine Variation zwischen dem Zusammenstoßen und dem Geradenocherfaßtwerden der Umhüllungen 3 und 3' durch die Röhrchen 4 bzw. 5 möglich ist. Auf diese Weise kann auch die helixförmige Lage und damit auch der Längenausgleich des gespleißten Lichtwellenleiters variiert werden. Diese Variationsmöglichkeit ist in der Figur durch die Pfeile 6 bzw. 6' angedeutet. Die Fixierung der Röhrchen erfolgt durch Krimpen des Außenröhrchens 4 auf die Umhüllungen 3 und 3' bzw. auf das Innenröhrchen 5. Diese Röhrchen können in vorteilhafter Weise aus Metall bestehen ; aber auch andere widerstandsfähige Materialien sind durchaus möglich. Das Außenröhrchen ist längsgeschlitzt, wodurch eine gute Anpassung an die entsprechenden Durchmesser der Umhüllungen gegeben ist. Außerdem ist es nach dem ausgeführten Spleißvorgang möglich, den Durchmesser des längsgeschlitzten Außenröhrchens so weit zu verringern, bis es schließlich den Außendurchmesser der Umhüllung der Hohlader erreicht. Auf diese Weise erhält man eine Spleißstelle ohne Aufdickung, so daß die Einfügung in den Kabelverband ohne Schwierigkeiten erfolgen kann. Hierbei ist allerdings ein entsprechend angepaßtes Innenröhrchen einzusetzen. Zur mechanischen Verklemmung der Röhrchen ist es zweckmäßig, die Enden in entsprechender Weise aufzurauhen, um guten Griff zu gewährleisten. Das Außenröhrchen 4 kann unter Umständen von der üblichen zylindrischen Form abweichen und zum Beispiel U-förmigen Querschnitt aufweisen.

Auch die Fixierung der Röhrchen auf den Umhüllungen 3 bzw. 3' der Hohlader kann verschieden ausgeführt sein. Es kann je nach Art des Kunststoffes der Umhüllungen 3 bzw. 3' auch ein Klebstoff verwendet werden, durch den die Röhrchen festgelegt werden.

Abschließend sei darauf hingewiesen, daß dieses Spleißverfahren auch bei gefüllten Hohladern einsetzbar ist.

## Ansprüche

1. Verbindungsanordnung für Lichtwellenleiter-Kabel mit Hohladern, bei denen die auf Stoß gespleißten Lichtwellenleiter lose und helixförmig in den Umhüllungen angeordnet sind, wobei Röhrchen zur Überbrückung der Lichtwellenleiter-Verbindungsstelle an den Enden der Umhüllungen angebracht sind, dadurch gekennzeichnet, daß ein Außenröhrchen (4) und ein Innenröhrchen (5) im Bereich der Trennstelle die Umhüllungen (3-3') überbrückend angeordnet sind, wobei das Außenröhrchen (4) längsgeschlitzt und auf dem Innenröhrchen (5) und den dazwischenliegenden Umhüllungen (3-3') durch Aufkrimpen fixiert ist.

2. Verbindungsanordnung nach Anspruch 1, dadurch gekennzeichnet, daß das Außenröhrchen (4) U-förmigen Querschnitt aufweist.

## Claims

1. Connecting system for light-waveguide cables with tubular cores in which the butt-spliced light-waveguides are loosely and helically disposed in the sheathing and small tubes are provided to bridge the connecting piece of the light-waveguide at the end of the sheathing, characterised in that a small external tube (4) and a small internal tube (5) are situated in the region of the joint so as to bridge the sheathing (3-3') and the small external tube (4) is longitudinally slit and is secured on the small internal tube (5) and on the interposed sheathing (3-3') by crimping means.

2. Connecting system according to claim 1, characterised in that the small external tube (4) has a U-shaped cross-section.

## Revendications

1. Dispositif de connexion pour des câbles à guides d'ondes de lumière avec des brins creux, dans lesquels les guides d'ondes de lumière à épissure à about, sont disposés librement et sous une forme hélicoïdale dans des enveloppes, des petits tubes étant disposés aux extrémités des enveloppes pour former un pont au niveau de la liaison entre les guides d'ondes de lumière, caractérisé par le fait qu'un petit tube extérieur (4) et un petit tube intérieur (5) sont disposés au niveau de la séparation des enveloppes (3, 3') pour constituer le pont, le petit tube extérieur (4) étant fendu longitudinalement et étant fixé par rétreint sur le petit tube intérieur (5) et sur les enveloppes intermédiaires (3, 3').

2. Dispositif de connexion selon la revendication 1, caractérisé par le fait que le petit tube extérieur (4) a une section transversale en forme de U.